(19) **Europäisches Patentamt / European Patent Office / Office européen des brevets**

(11) **EP 4 726 022 A1**

(12) # EUROPEAN PATENT APPLICATION
published in accordance with Art. 153(4) EPC

(43) Date of publication:
**15.04.2026 Bulletin 2026/16**

(21) Application number: **24818199.2**

(22) Date of filing: **03.06.2024**

(51) International Patent Classification (IPC):
*C12G 1/00* (2019.01)    *C12G 1/02* (2006.01)
*C12G 1/04* (2006.01)    *C12H 1/00* (2006.01)
*C12H 1/14* (2006.01)    *C12L 11/00* (2006.01)
*B01F 33/40* (2022.01)    *B08B 9/08* (2006.01)

(52) Cooperative Patent Classification (CPC):
**B01F 23/40; B01F 33/40; B08B 9/08; C12G 1/00;
C12G 1/02; C12G 1/04; C12H 1/00; C12H 1/14;
C12L 11/00**

(86) International application number:
**PCT/CL2024/050053**

(87) International publication number:
**WO 2024/250125 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 CL 202301638**

(71) Applicant: **Ingeagro Sociedad Anónima
Quillota, 2263782 (CL)**

(72) Inventor: **YAKASOVIC SAAVEDRA, Tomás Iván
Limache, 2240373 (CL)**

(74) Representative: **Bardehle Pagenberg
Partnerschaft mbB
Patentanwälte Rechtsanwälte
Prinzregentenplatz 7
81675 München (DE)**

(54) **SULFUR DIOXIDE DOSING APPARATUS AND METHOD**

(57) A device and method for dosing sulfur dioxide ($SO_2$) gas into wine contained in wooden barrels, comprising an application lance comprising a nozzle having larger holes that allow both the entry of wine into the nozzle and the exit of $SO_2$ gas from the nozzle, generating a gas flow sufficient for a homogeneous distribution of the gas within the barrel; and a support comprising a base and legs that support the application lance on the upper wall of the barrel near the area of the bung, wherein the support of the application lance comprises a base that in the position of use is horizontal to the wall of the barrel, raised only a few centimeters from the wall of the barrel.

FIG. 4

EP 4 726 022 A1

**Description**

The present invention relates to a method and apparatus for facilitating and effectively controlling the dosage of sulfur dioxide gas (SO$_2$) in wine contained in wooden barrels. The apparatus of the application has an application lance comprising a nozzle for generating pulses of a gas flow that allows for greater agitation of the wine and thus better distribution of the gas within the barrel, and has a support for the application lance to fix the nozzle to the barrel while the gas is being applied. The method of this invention finds its application mainly in the wine industry, in which the application of sulfur dioxide is required to prevent the decomposition of wines during storage periods.

Sulfur dioxide (or sulfurous anhydride; SO$_2$) is used in winemaking for its antioxidant action and as an antiseptic, slowing the development of unwanted microflora and harmful organisms, and it is also used because it facilitates the solubilization of phenolic substances. The sulfitation of wines is conducted with the aim of controlling the fermentation of the wine.

Therefore, there is a need to facilitate the sulfitation process and to effectively control the amount of sulfur dioxide to be used in the must for winemaking in order to prevent the decomposition of wines during aging periods. The process of controlling the amount of sulfur dioxide is left to the winemaker, and it influences the expected quality of the final product to be bottled.

Due to wine production regulations, it is necessary to have a sulfitation system that safely allows reaching the desired SO$_2$ levels.

Currently, the most commonly used systems for adding sulfur dioxide to wine barrels in the national industry are the following:

Adding a concentrated SO$_2$ solution of about 5% in water manually. The sulfur dioxide solution is usually prepared the day before by bubbling gaseous SO$_2$ into pure water, until the solution reaches the desired concentration. This process is usually slow, and gas emissions occur both during the preparation of the concentrated SO$_2$ solution and in the handling of the dissolution throughout the sulfitation process. After applying the concentrated SO$_2$ solution to the barrel, nitrogen is bubbled inside it to generate the necessary effervescence to homogenize and achieve a good mixture of the SO$_2$ with the wine. With this sulfitation method, although the desired amount of SO$_2$ can be added with a certain degree of certainty, it has the disadvantage of requiring a time-consuming prior process that generates a foul smell and the disadvantage of adding a certain amount of water to the wine. The amount of water added within 1 year can reach 0.5% or more of the barrel's volume. In this method the operator also doses, fulfilling both functions, making the application and dosing, that is, the operator must also determine how much sulfited water should be placed in each barrel, with the possibility of making a dosing error in the process. Furthermore, it is a sulfitation method that requires a subsequent stirring step. To agitate, nitrogen is bubbled through, which involves managing a hose that is not always properly sanitized and can cause cross-contamination between barrels when used on all barrels to be treated without any sanitization method between barrels. Agitation can also be done with a stick or baton, a process also called batonage.

The present invention also allows the sulfitation of the empty barrel, an activity that is carried out before filling the wine barrels, whether it is the first time a barrel is used or when it is reused, that is, the application of gaseous SO$_2$ in high weight for the sanitization of the barrel, currently this is done by burning sulfur tablets inside the barrels, a procedure that is imprecise and hazardous for the personnel in charge of the sulfitation due to the emanation of sulfur dioxide from the combustion of the tablet.

Another manual method used to add sulfur dioxide to wine barrels involves effervescent tablets of sodium or potassium metabisulfite, both of which are salts. When these tablets are added to the wine, they generate effervescence, through which the SO$_2$ gas mixes with the wine inside the barrel, thus achieving an adequate distribution of SO$_2$ in the wine. The drawback of this method is that sodium or potassium metabisulfite tablets have a pre-established weight; they do not have grooves or markings that indicate the weight. Furthermore, since the tablets are not marked, there may be an error in the application of a particular tablet; it is easy for the user to make a mistake. Another drawback of using effervescent sodium or potassium metabisulfite tablets is that the tablet adds sodium or potassium to the wine, elements that are necessary to obtain SO$_2$ in solid tablet form, as sodium metabisulfite or potassium metabisulfite, both salts. It should be noted that these elements can change the taste of the wine. In this method the operator also doses, fulfilling both functions, making the application and dosing, that is, the operator must also determine how many tablets should be placed in each barrel, with the possibility of making a dosing error in the process.

The application WO2008055905 discloses a device that doses the required amount of SO$_2$, achieving the dosage of known quantities of gaseous SO$_2$ in wine, without the addition of unwanted elements, and the operator only needs to apply it to the barrel, removing the uncertainty of the amount of SO$_2$ applied to each barrel. This device has an application lance with a diffuser that generates a gentle pulse of bubbles that may not be enough to agitate the wine inside the barrel. Furthermore, the WO2008055905 device has the drawback that it takes between 20 and 30 seconds to apply per barrel. During this time, the operator must hold the application lance in the area of the barrel's plug to keep the lance in the correct application position, which causes fatigue in the operator, which can lead to application in an area other than the center of the barrel, thus impairing the distribution of SO$_2$ in the barrel.

To determine if the gentle pulse of bubbles generated by the WO2008055905 diffuser is enough to agitate the wine and achieve a homogeneous distribution of $SO_2$ inside the barrel, the concentration of sulfite that actually exists inside the barrel was measured, for which a sample is generally taken with a pipette on the surface, center and bottom of the barrel just below the position where the plug of the same is located.

This conventional sampling method did not allow the determination of sulfite concentration in locations other than the barrel plug area, so a multipoint sampler was developed. With the multipoint sampling device, samples were taken from different locations inside the barrel, and it was observed that the distribution of $SO_2$ inside the barrel was not homogeneous when $SO_2$ was applied with the WO2008055905 device.

To overcome the problem of poor $SO_2$ distribution within the barrel, this invention developed an application lance comprising a nozzle that generates higher flow pulses, creating greater turbulence that better agitates the wine inside the barrel when the pulses are applied, thus achieving a better distribution of $SO_2$ in different locations within the barrel.

The nozzle of the apparatus of the present invention generates pulses of greater flow, which also reduced the application time by half or less, making the application process faster.

Furthermore, to facilitate the sulfitation process and prevent the operator from holding the application lance in the area of the barrel's plug for the entire duration of the application, a support was developed that keeps the application lance in the correct position in the area of the plug's location independent of the operator for the duration of the pulses. This application lance support ensures that the nozzle is in a suitable or correct position, that is, that the nozzle is at a medium height inside the barrel and the application lance is held vertically and perpendicular to the transverse axis on the longer side of the barrel in the center of the barrel. The support also prevents operator fatigue from holding the application lance and prevents the application lance from being at an angle and the application is not conducted correctly. Furthermore, the application lance support is flat, so that when used it does not protrude much from the surface of the barrel, facilitating the application in barrels that are stacked on top of each other, where the space between barrels in the area of the plug is limited.

Between the application to one barrel and to the next, the application lance is disinfected using ozone gas. This is done using a container designed to receive the application lance, inside which an adequate concentration of ozone is kept to sanitize it, thus preventing cross-contamination between the wines of the different barrels.

Furthermore, it was found that many times after sulfiting a certain number of barrels, the operator would find that some barrels were not yet sulfited but could not determine which barrel was missing. To keep track of and record the barrels that were subjected to the treatment, an important tool related to traceability was also added to the process.

Furthermore, this invention also allows for the sanitization of empty barrels. The sulfiting of the empty barrel is done before filling the wine barrels, whether it is the first time a barrel is used or when it is reused. To sulfit the empty barrel, gaseous $SO_2$ is applied in high quantities for the sanitization of the barrel. Currently, this is done by burning sulfur tablets inside the barrels, a procedure that is imprecise and risky for the personnel in charge of sulfiting due to the emission of sulfur dioxide from the combustion of the tablet.

In summary, this invention offers advantages over the prior art, which are as follows:

- a better distribution of sulfite within the barrel,
- performs the application in less time, improving application speed,
- facilitates handling of the application lance and keeps the application lance in a suitable position,
- allows for sanitization of the application lance between applications,
- better information management is achieved by incorporating a traceability tool,
- furthermore, no additional water or salts are added to the wine, and sanitation is improved,
- in this method, the operator does not dose, only applies, eliminating the possibility of dosage error in the process,
- it has an application mode for empty barrels, allowing them to be sanitized and replacing sulfur tablets.

DESCRIPTION OF THE FIGURES

Figure 1 shows an elevation view of the nozzle
Figure 2 shows a cross-section of the nozzle
Figure 3 shows a bottom view of the application lance support
Figure 4 shows a perspective view of the application lance support
Figure 5 illustrates a multipoint sampler
Figure 6 illustrates a schematic diagram of the apparatus of the invention

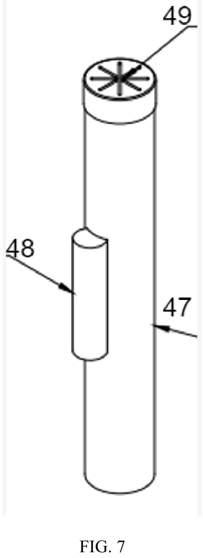

Figure 7 shows the sanitizing receptacle of the application lance

DETAILED DESCRIPTION OF THE INVENTION

A dosing apparatus for sulfur dioxide gas ($SO_2$) in wine contained in wooden barrels, comprising a sensor for measuring pressure and a sensor for measuring temperature, a known volume measuring chamber (9) that is connected by an outlet duct to an application lance (10),

where the application lance comprises a nozzle having holes (23) that allow both wine to enter the nozzle as well as $SO_2$ gas outlet from the nozzle, generating a gas outlet flow from the nozzle into the barrel sufficient for a homogeneous distribution of the gas within the barrel;

where the application lance comprises a support comprising a base and legs that allows the application lance to be supported on the upper wall of the barrel near the plug area;

where the base of the application lance support, in the position of use, is horizontal to the barrel wall, raised only a few centimeters from the barrel wall.

The application lance support was developed to support the application lance in the barrel and fix the nozzle to the barrel and prevent the operator from having to hold the application lance during the time it takes to apply the gas.

A method for dosing sulfur dioxide gas ($SO_2$) into wine contained in wooden barrels, the method comprising the steps of:

introducing the application lance inside the barrel, where the application lance comprises a nozzle having holes (23) that allow both wine to enter the nozzle as well as $SO_2$ gas outlet from the nozzle, generating a gas flow sufficient for a homogeneous distribution of the gas within the barrel;

supporting the application lance in the barrel and fixing the nozzle in the plug area by a support comprising a base and legs that support the application lance on the upper wall of the barrel near the plug area, where the base of the application lance support in the position of use is horizontal to the barrel wall, raised only a few centimeters from the barrel wall;

activating the device to generate a cycle of shots that deliver doses of $SO_2$ to be dosed in grams, until a predetermined amount of gas is achieved, where the application lance is kept in a vertical and perpendicular position regarding the transverse axis of the larger side of the barrel during the time that the shooting cycle lasts, independent of the operator.

The method also includes a step of scanning a barcode embedded in each barrel to improve traceability, where the barcode must be scanned before activating the device to generate a firing cycle, where the barcode reading provides data on the dose that corresponds to each barrel, where the method also comprises the step of visualizing if the barrel has already been treated, thus avoiding gasifying barrels that have already been gasified.

The method also includes the step of verifying if the application was made to all barrels, determining which barrel was left untreated, and correcting the error to ensure that the application was made to the entire batch, and also includes collecting information on the barrel number, the dose applied, the date and time of the application and the identification number of the application apparatus and the identification of the user who made the application.

The dosing method of this invention comprises delivering a dose of $SO_2$ to be dosed in grams until the predetermined amount of gas is achieved. The amount of gas is determined by the steps of measuring the pressure difference and the gas temperature inside the constant volume measuring chamber. The $SO_2$ dose is delivered by actuating the application system; a signal is sent to a microprocessor, where the microprocessor, after receiving the application signal, allows the outlet valve to open to begin discharging a predetermined amount of gas from the measuring chamber.

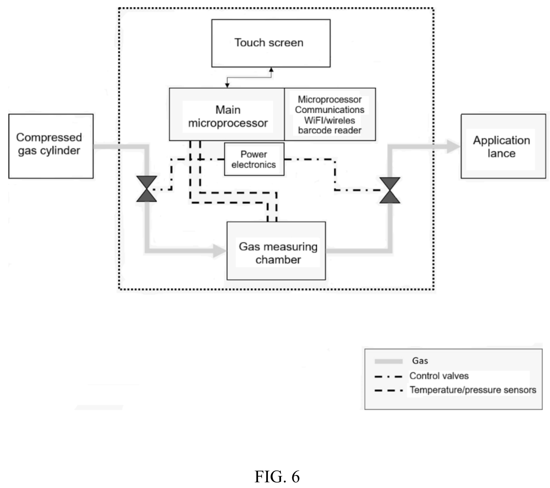

The schematic diagram of the apparatus of the invention is shown in Figure 6, where a measuring chamber (9) intended to contain the gas to be injected is shown. This measuring chamber (9) is connected by an inlet duct to a compressed gas cylinder (1). Between the compressed gas cylinder (1) and the measuring chamber (9) there is a gas shut-off valve and an inlet valve (3). The intake valve (3) is a solenoid valve that allows to regulate the flow of gas from the compressed gas cylinder (1) to the measuring chamber (9). The measuring chamber (9) is connected by an outlet duct to an application lance (10). Between the measuring chamber (9) and the application lance (10) there is an outlet valve (4). The outlet valve (4) is a solenoid valve that allows to regulate the flow of gas from the measuring chamber (9) to the application lance (10). In the measuring chamber (9) there are two sensors intended to measure the pressure and temperature inside the measuring chamber. The pressure sensor allows measuring the gas pressure inside the measuring chamber (9). The temperature sensor allows the temperature inside the measuring chamber to be measured. The temperature and pressure sensors are connected to an electronic control system comprising a microprocessor digital circuit (8) and a control panel. The microprocessor allows processing the information delivered by the temperature and pressure sensors, and performs the necessary calculations from the data entered on the control panel to calculate the correct gas dose to apply.

The apparatus for dosing sulfur dioxide ($SO_2$) gas mainly comprises:

A compressed gas cylinder (1), at the outlet of the compressed gas cylinder there is a gas shut-off valve. The gas from the gas cylinder (1) is conducted through an inlet duct to the inlet of the measuring chamber where there is an inlet solenoid valve (3) that regulates the passage of gas to the measuring chamber (9).

A measuring chamber: immediately after the intake valve (3) there is a measuring chamber (9) of constant and known volume, where there are two sensors, a pressure sensor that allows measuring the pressure inside the chamber, and a temperature sensor that allows measuring the temperature inside the measuring chamber. The chamber ends with an outlet solenoid valve (4) that allows the dose to be discharged.

A secondary gas circuit that begins with the outlet valve (4) that allows the passage of gas which is conducted through an outlet duct to the application lance.

The outlet duct ends in the application lance (10) comprising a nozzle that facilitates the dosing of gaseous $SO_2$ in the center of the barrel.

An electronic control system. This system is the brain of the team and consists mainly of a state-of-the-art main microprocessor (8) and a control panel. At the end of the dosing, the outlet valve (4) is closed by the main microprocessor (8) upon receiving a signal produced by the application lance (10), according to the data delivered and measured, starting a new loading cycle of the measuring chamber (9).

The main microprocessor (8) carries in its memory a program that allows the correct interpretation of the data to be able to execute the actions necessary for dosing. This main microprocessor receives information entered by the user from the control panel. Using the data that was entered, a state-of-the-art microprocessor calculates the correct dose to apply, which is determined by the decrease in pressure in the measuring chamber during discharge.

The control panel consists of a touch screen system, which allows the equipment to be turned on and off, allows viewing and setting the desired gas dose, reviewing internal records and general information. The gas dose to be dispensed in mass units is specified in the control panel. The dose to be applied, the number of applications made, the number of doses remaining, etc. can be seen in the touch screen.

In manual application mode, the dose can be entered manually on the touch screen.

The touch screen has a menu that allows you to select whether the application is done in a full barrel for the sulfitation process or in an empty barrel for sanitization. For the sulfitation process of a full barrel, the dose can be entered manually on the touch screen, for example, in intervals of 1 to 0.1 grams. For the sanitization process of an empty barrel, the dose can be entered manually on the touch screen, for example, in intervals of 1 to 10 grams.

The sulfitation process, which includes the optional preliminary step of reading a barcode, provides the dosage information to be applied simply by reading the barcode, where each barrel is assigned a barcode, and the equipment determines the dosage to be applied with the information obtained from the reading. If you do not want to include a barcode on the barrels, you can program the dose manually.

To read barcodes, wireless equipment can be used, which may require Wi-Fi. If this tool is not available, the dose data can be loaded into the equipment for each batch, and an application program is downloaded for each number of barrels. You can use the bridge phone or data exchange interface, with a phone application that connects to the computer, then the phone connects to the internet to download the data.

If the gas runs out in one unit, the batch of barrels can be dosed with another unit and then consolidate the results. If one barrel remains to be dosed, the process can continue the next day and complete the batch.

Using the data on the mass of gas to be dosed, together with the information received through the pressure and temperature sensors of the device, the electronic control system is able to calculate the parameters necessary for dosing exact quantities of gas.

The intake valve (3) or intake solenoid valve allows to cut the flow of the gas from the compressed gas cylinder (1) to the measuring chamber (9). This intake solenoid valve must be suitable for the operating conditions, i.e., it must be suitable for the intake pressure versus the pressure in the measuring chamber. The valve size must be adequate to achieve the doses in reasonable times.

The outlet valve or outlet solenoid valve (4) allows to cut the flow of the gas that goes from the measuring chamber through the outlet duct to the application lance (10). This outlet solenoid valve must be suitable for the operating conditions, i.e., for the pressure conditions of the measuring chamber versus the pressure of the gas discharge. The valve size must be adequate to achieve the doses in reasonable times.

The measuring chamber (9) must meet the basic condition of having a constant and known volume, since the equipment is calibrated with this volume value. The size of the measuring chamber can vary from 200 to 1000 cubic centimeters, more preferably between 200 and 500 cubic centimeters and even more preferably 300 cubic centimeters. The chamber volume is determined by the range of grams to be dosed, the inlet pressure and the discharge pressure, which is determined when building the gas dosing device.

The pressure sensor of the measuring chamber must be mounted either inside the chamber or externally connected to the chamber, so that the internal pressure can be determined. The pressure sensor material must be inert to the gas or gas mixture being dosed.

The temperature sensor of the measuring chamber may have analog or digital outputs, and must be mounted inside the chamber or may be connected externally to the measuring chamber, so that the temperature of the gas or gas mixture inside the measuring chamber can be determined at all times. The sensor material must be inert to the gas or gas mixture being dosed. In the case of large to very large chambers, there may be more than one temperature sensor to measure in different areas and obtain a more representative measurement of the temperature inside the measuring chamber.

The final gas dosing system comprises an application lance, which includes a nozzle that allows generating a gas flow that enables a homogeneous distribution of the gas inside the barrel.

The control panel allows you to enter dosing parameters, such as the mass of gas to be dosed. To specify the amount of gas to be dosed, the molecular weight of the gas must be specified beforehand in the equipment by a setting on the printed circuit board or on the panel by selectors (jumpers, switch), through the control panel (using the keyboard, dial or other mechanism provided for this purpose), fixed in the microprocessor or through a data channel (serial, radio frequency, or any other alternative form of data transmission), depending on the configuration of the equipment. The quantities to be dosed can be entered using a dial, or a keyboard with the value displayed on the control panel display.

The control panel also allows viewing the number of injections performed, both absolute totals (since the equipment was put into service), as well as partial ones defined by the user, for which it has a "reset to zero" option. This last option allows you to control the dosages conducted over a period of time. The total value allows for monitoring equipment usage and scheduling maintenance. In addition, the indicators on the control panel allow you to see if the system is powered on and if the chamber is charged to start dosing. The indicators on the control panel also allow you to see whether or not the pressure has reached the required value inside the chamber. If the pressure does not reach the required value, there would be a pressure failure in the intake line.

The digital microprocessor circuit (8) allows the dosing logic to be executed, and is based on a state-of-the-art microprocessor, which allows for a considerable reduction in size compared to older (analog) technologies. The microprocessor can be considered the brain of the equipment, since it is the one that performs the calculations necessary to conduct the dosing, the measurements, and their interpretation. The process is described in the microprocessor by a program specially written for it.

APPLICATION LANCE

The gas dosing system of this invention comprises an application lance, which includes a nozzle that allows generating a gas flow sufficient for a homogeneous distribution of the gas within the barrel. The dosing system further comprises a support for the application lance comprising a base and legs that can be supported on the upper wall of the barrel near the area of the plug.

NOZZLE

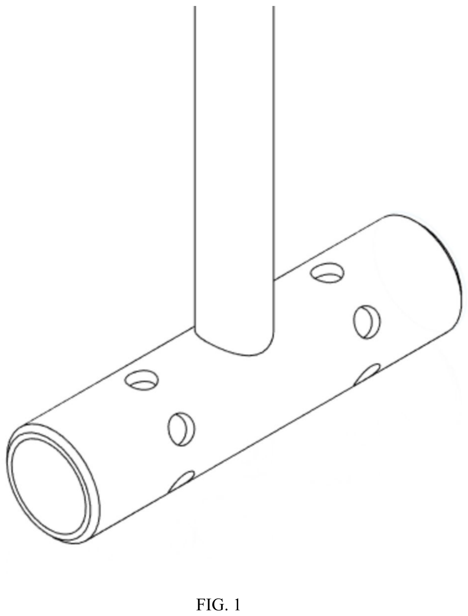

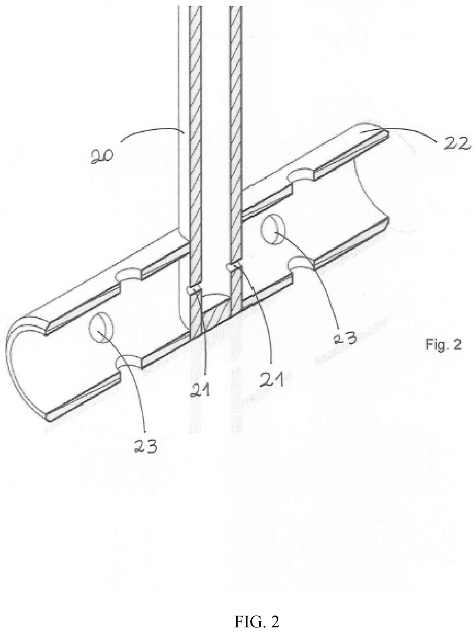

The nozzle comprises a long vertical tube (20) which at one lower end opens into a transverse tube (22) forming a T. The lower end of the vertical tube has two smaller lateral holes (21) through which the $SO_2$ passes into the transverse tube (22). The cross tube forms a closed cylinder at its ends, and has larger holes (23). The holes (23) of the cross tube have a diameter of 2 to 6 mm, which allow both the entry of wine into the nozzle as well as $SO_2$ gas outlet from the nozzle. The cross tube (22) of the nozzle has between 3 and 10 holes (23), preferably between 4 and 6 holes on each side, totaling between 6 and 20 holes. The diameter of the holes (23) ranges from 2 to 6 mm in diameter, preferably from 3 to 4 mm in diameter. See Figure 1 and Figure 2 which show, respectively, an elevation view and a cross-section of the nozzle.

In the nozzle, the gas flow enters through the long vertical tube (20) and passes through the side holes (21) located at the end of the vertical tube, into the transverse tube (22). The holes (23) in the cross tube (22) allow recirculation of wine within the nozzle, thus generating a mass flow of wine into the cross tube.

When the device is activated, gas comes out, a low pressure center is generated inside the transverse tube, wine enters, the $SO_2$ gas pushes a mass of wine out of the nozzle, so that not only does gas come out at the holes of the transverse tube, but wine is also pushed out by pressure difference. The holes in the cross tube allow a little gas to push the mass of wine, increasing the displacement effect, achieving a greater range of the shot, and generating greater agitation of the wine inside the barrel.

With the use of the nozzle, the gas outlet flow was increased 3 times compared to the flow achieved with a diffuser where the pore size is smaller, resulting in a greater flow of $SO_2$ gas coming out of the nozzle. The nozzle also makes the shots faster, increasing the application speed. Furthermore, with the increased outflow, additional agitation of the wine inside the barrel is achieved, where the gas moves a greater mass of wine, achieving a more homogeneous distribution of $SO_2$ inside the barrel.

APPLICATION LANCE SUPPORT

The application lance has a support comprising a base that can be rest on the upper wall of the barrel near the plug area. The base is positioned perpendicular to the nozzle. The application lance support is flat and, in the position of use, is horizontal to the barrel wall, raised only a few centimeters from the barrel wall.

In a preferred embodiment of this invention, the support comprises a flat rectangular base (30). The base on its lateral edges comprises lateral vertical extensions (36) and on its posterior edge comprises a posterior vertical extension (40). The vertical lateral extensions (36) at their front end (37) include respective side tabs (31) that serve as a support leg on the barrel wall.

The base (30) further comprises a trapezoidal front extension that narrows sharply in its central front area (38) and then deviates vertically downwards in a central rectangular section (32) that reaches a greater height compared to said lateral vertical extensions (36) and said rear vertical extension (40). The central rectangular section (32) in turn includes a central tongue (33) that serves as a support leg to the inner wall of the barrel.

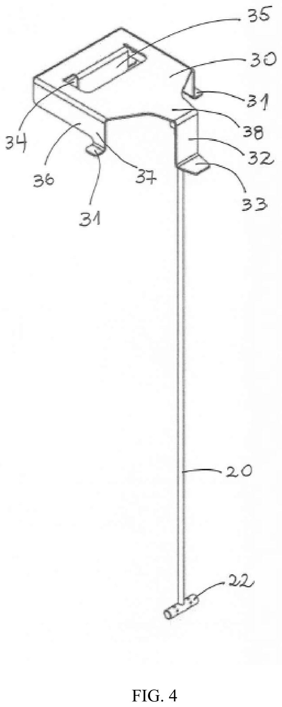

The two side tabs (31) and the central tab (33) are shaped like support legs to rest on the barrel. The two side legs or side tabs (31) rest on the outer upper wall of the barrel near the plug, while the central rectangular section (32) is inserted into the barrel in the plug area, while the central tab (33) or central support leg rests on the inner wall of the barrel in the plug area. The central leg is fitted inside the barrel by the horizontal flange or central tongue (33) to allow a secure grip of the base (30) of the application lance to the barrel. See Figure 4, that shows a perspective view of the application lance support

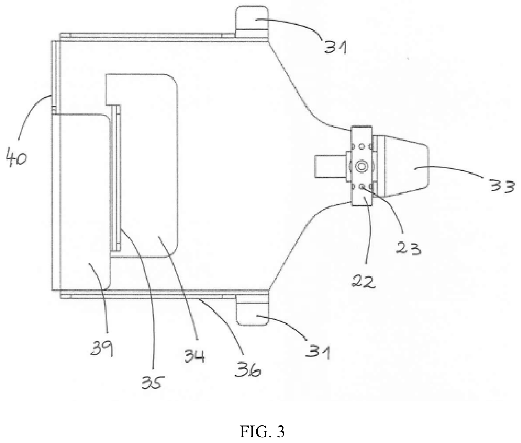

In addition, the base (30) of the application lance support has a groove (34) arranged in the rear middle area. Through the slot (34) a user's hand can be inserted to allow manual gripping of the application lance, see Figure 3.

The groove (34) in the base of the support has a rectangular wall (35) on its rear edge that slopes vertically downwards to allow a comfortable grip of the application lance. Likewise, the rear vertical extension (40) of the base of the support includes a horizontally oriented rectangular extension (39), the extension of which does not extend beyond the groove (34), where the rectangular wall (35) of the groove (34) and the rectangular extension (39) of the rear vertical extension (40) form a convenient grip handle for the application lance. See Figure 3, that shows a bottom view of the application lance support

The application lance holder has a trigger button on the side vertical extension to activate the device. The device is activated once per application. Activating the device generates a cycle of shots, which generates the doses in grams of $SO_2$ to be applied. Therefore, the application lance must remain in the correct position for the duration of the shooting cycle so that the distribution of the gas inside the barrel is homogeneous.

For example, in a prior art device comprising a diffuser, applying 3 grams requires 30 applications of 0.1 grams; this implied that the user would have to be holding the application lance for 30 to 45 seconds on each barrel, and it could not be ensured that the lance was in the correct position for proper application at all times.

The application lance support of this invention causes the application lance to settle itself into a correct position in the center of the barrel. The user installs the application lance into the barrel plug, and the support holds the application lance in position without the user having to hold it for the entire duration of the firing cycle for each application, where in each application, the firing cycles take approximately 20 to 30 seconds.

The application lance support is flat and comprises support legs that keep the application lance raised only a few centimeters from the barrel wall. The support legs allow the application lance to be fixed in position on the barrel, in addition the support has a groove (34) for the manual grip of the application lance, both the support legs and the grip groove allow for effortless application and easy handling of the application lance.

The application lance support of this invention makes the apparatus of this invention easier to use. Not only does it maintain the position of the application lance within the barrel, but also, because the application lance support is flat and has little height, in use it does not protrude much from the surface of the barrel, facilitating application in barrels at height and allowing application in barrels that are stacked on top of each other, where the space between barrels in the area of the plug is limited.

Optionally, the nozzle can have a sensor that prevents application if the nozzle is not in contact with the wine.

RECEPTACLE FOR KEEPING THE APPLICATION LANCE SANITIZED

To prevent the application lance from becoming a source of contamination and to prevent it from being placed on the ground, or in any unsuitable location, a receptacle was designed to keep the application lance sanitized.

The application apparatus optionally includes a receptacle to keep the application lance sanitized and prevent cross-contamination, i.e., to keep the place where the application lance is stored sanitized when not in use or between each application.

To sanitize the lance, one could use, for example, a container with sulfited water; however, the sulfited water can create an additional source of contamination when the lance is left in the container with water over the weekend, or the water may be sucked into the equipment, or the $SO_2$ may crystallize inside the hose. To avoid these problems, the present invention uses a receptacle to keep the application lance sanitized, comprising an ozone generator, with which the application lance can be sanitized dry.

The present invention optionally comprises a receptacle for keeping the application lance sanitized comprising a stainless-steel tube (47) approximately 40 cm to 50 cm long and 5 cm to 7 cm wide such that the nozzle of the application lance can fit inside the receptacle. The receptacle comprises a flexible silicone or Teflon closure (49) at the top that allows the application lance to be inserted while keeping the receptacle closed.

For sanitizing the lance, an ozone generator (48) is incorporated, which injects this gas into the tube (47) where the application lance is inserted, thus sanitizing it and preventing cross-contamination between the application of one barrel and another barrel.

The receptacle for sanitizing the application lance is dry ozonated; the ozone generator maintains a constant flow of ozone within the receptacle while in use, or the ozone generator can be activated upon insertion of the lance. The moment the lance enters the receptacle, the ozone generating system can be activated by a sensor (optical or conductivity). The receptacle includes a silicone or Teflon closure or plug that allows the application lance to be inserted and prevents ozone from being released into the environment.

TRACEABILITY

The apparatus of the invention also comprises a barcode reader that allows the work performed to be traced.

For traceability, the sulfitation process includes a step that involves scanning a barcode embedded in each barrel. The barcode must be scanned before application; this reading provides data on the amount to be sulfited in each barrel, and keeps track of the work done, reducing working time and uncertainty.

In the traceability process, each barrel must have a barcode. The operator scans the barcode before making the application. By reading the barcode, the equipment delivers the correct dose to each barrel. The dose to be applied is determined by the winemaker, who determines the amount in grams to be applied per batch of barrels, and this amount in grams determined by the winemaker is entered into the equipment.

When a batch is finished being sulfited, the system can verify if the application was made to all barrels, can know if any barrels were left unsulfited and can determine which barrel was left untreated, allowing the error to be corrected, information that is important to ensure that the application was made to the entire batch.

This also prevents double sulfiting, since by scanning the barcode, the device provides information that allows you to see if the barrel has already been treated, thus avoiding gasifying barrels that have already been gasified. A gasification log is kept for each barrel; the information collected with each application comprises: barrel number, dose applied, date and time of application and identification number of the application apparatus, and the identification of the user who performed the application.

When the workday begins, the team's startup routine includes identification of the user or device operator.

The information management allows for better traceability; a data management can be done to know how many barrels were sulfited, how long the operator takes in the process, how many barrels can be sulfited in a day, and allows for a more thorough control system.

The barcode also has a human reading (HR) with a numeric code. The barcodes can be placed in a different location, away from the cork in the barrel, to avoid contamination with the overflow wine. Therefore, the barcode should not be placed near the cap. Furthermore, the barcode can be printed in the color of the barrel, including the winery's logo, etc.

The barcode reader can be wireless, attached to the application lance, or independent of the application lance.

As an optional way to identify barrels and have dosage information without the use of a barcode, a chip with the barrel identification can be implemented in each barrel, and this identification can be transmitted to a receiver in the form of a radio frequency signal as an alternative to the barcode. In this case, a chip can also be placed in the barrel's plug location to facilitate reading when inserting the application lance.

GAS APPLICATION IN EMPTY BARREL

In one embodiment of the invention, the gasifier apparatus allows the gasification of $SO_2$ in empty barrels, because there is a need to sanitize the barrels before use.

Prior to this invention, to sanitize empty barrels, sulfiting of barrels by combustion was used, using, for example, a 5-gram sulfur tablet for a 220-liter tank. In this process, the tablet is burned inside the barrel, leaving residue inside it. A perforated, bright yellow sulfur tablet is used; the tablet is lit outside the barrel, placed inside the empty barrel, and allowed to burn inside the barrel. The perforation of the pellet allows it to be manipulated, tied, and lit before being placed inside the barrel.

The apparatus of this invention allows the empty barrel to be sanitized prior to its use, by applying a jet of gas to the barrel with a greater weight, about 5 to 20 grams of gas per barrel, said weight does not need to be very precise.

To obtain a higher weight for application to empty barrels, the equipment valves are opened at medium pressure, and the online flow that the equipment can deliver is measured, for example, 10 liters of gas per minute, the empty barrel can be sulfited with a larger amount of gas for sanitization. The apparatus of this invention allows the sanitization of empty barrels by preventing residues inside the barrel, residues that are a product of the combustion of sulfur tablets inside the barrel, and prevents the emission of sulfur gases outside the barrel when the tablet is lit.

MULTIPOINT SAMPLER

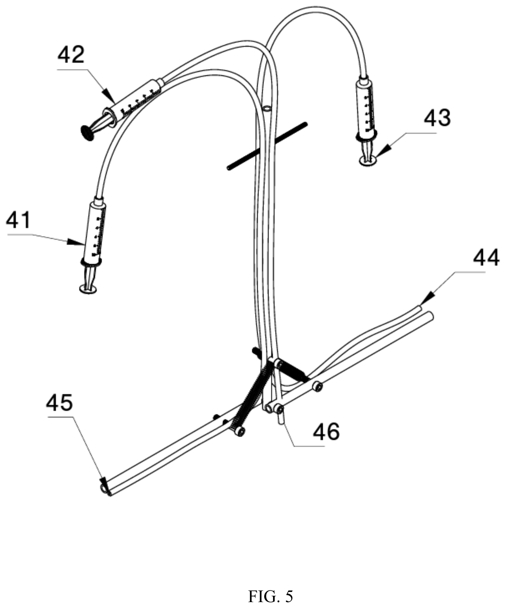

This invention also comprises a multi-point sampler comprising three stainless steel rods, to which hoses (44, 45, 46) are attached that allow sampling from different sectors within the barrel. At each end of the hoses, the multipoint sampler comprises hollow tubes with a graduated scale (41, 42, 43) with a plunger inside that allows wine samples to be taken from different parts within the barrel. The multipoint sampler is inserted closed into the barrel and once inside the barrel it opens like an umbrella. The multipoint sampler comprises a T-shaped spring, which allows the rods that hold the sampling device to be opened and closed, making it possible to take samples at a distance of approximately 70 cm. See Figure 5.

The multipoint sampler allows you to take one central sample and two side samples at the same time. A sample in the central part of the barrel 30 centimeters from the surface, a sample in the central part to the left of the position of the barrel plug and a sample to the right of the position of the barrel plug at approximately 35 cm away from the central part where the barrel plug is located.

When taking the sample, the first 10 ml of wine are discarded because they correspond to the contents inside the hose. The multipoint sampler also has an element or tube that allows the multipoint sampler to be secured in place of the barrel plug and ensures the position of the multipoint sampler horizontally to the longest part of the barrel, to ensure that the legs open in a direction parallel to the longest part of the barrel.

The general concept of the dosing apparatus of this invention comprises applying an exact quantity of gas to a liquid by a measuring chamber of constant and known volume by the pressure difference in the measuring chamber, with the corresponding correction of the gas temperature. The equation that relates the variables of volume, pressure, and temperature is well known; it is the ideal gas law:

$$P \cdot V = n \cdot R \cdot T$$

where P is the pressure inside the measuring chamber, V is the volume of the measuring chamber, n is the number of moles of the gas, R is the gas constant and T is the absolute temperature. The parameter n is related to the mass of the gas through the molecular weight of the gas, thus making it possible to know the mass of gas stored in the chamber. For gases that do not comply or do not fit well to the ideal gas equation, there is the virial equation, which contains correction factors for the parameters to the operating conditions.

The measurement of the amount of gas is based on applying the ideal gas law PV=nRT, only in the environment in the measuring chamber, that is, it is necessary to measure the Pressure, Temperature and Volume of the measuring chamber. The goal is to deliver a dose of gas in grams, or in moles and then multiply by the molecular weight (64 g/mol in the case of $SO_2$) to obtain the amount in grams of gas.

The amount of gas delivered is calculated as follows. Considering that the volume of the measuring chamber is constant and known, and that the temperature does not change considerably in the dosing process, it follows that

P1·V = n1·R·T, at the beginning of the injection process, and
P2·V = n2·R·T, at the end of the injection process.

Taking the difference between both equations, we have

$$P1 - P2 = (n1 - n2) \cdot R \cdot T/V,$$

then rearranging the terms and solving for (n1-n2)

$$(n1 - n2) = (P1 - P2) \cdot V/R \cdot T,$$

where the equivalent of the decrease in moles in the chamber is related to the decrease in pressure in the chamber. Finally, this decrease in moles multiplied by the molecular weight of the gas gives us the dose of gas in grams:

$$(n1\text{-}n2) \cdot PM = \text{grams dosed.}$$

To determine the amount in grams of $SO_2$ needed to be injected, the following formula is used:

$$SO_2\,(g) = \frac{Dose \times F \times V}{10^3}$$

Where:

Dose: Free $SO_2$ required (mg/L)
F: factor dependent on the type of wine that varies between 1 and 3
V: volume of wine to be treated in L.

To determine the dose to be applied, it must be kept in mind that the pressure in the chamber cannot decrease without limits; therefore, the dosing process includes

a) defining a maximum decrease in pressure in the chamber
b) calculating how many grams it is equivalent to
c) comparing the amount in grams that you want to apply with the amount in grams calculated in step b)

If the amount in grams or dose that you want to apply is greater, calculate the number of successive dosage processes that must be applied to meet the amount in grams that you want to apply to achieve the final or total dosage.

If the amount in grams or dose that you want to apply is less than that calculated in step b), a single injection is made, where the final pressure is calculated depending on the amount in grams or dose that you want to apply using the equations above.

In general, in the sulfitation process, the desired dose is achieved with a series of sub-doses that the equipment calculates and performs automatically.

The gas dosing method comprises: opening the inlet valve (3) to allow the controlled entry of gas from a compressed gas cylinder into the constant-volume measuring chamber (9); measuring the pressure by a pressure sensor that continuously records the pressure increase within the measuring chamber up to a predetermined value; once the desired pressure is reached, closing the inlet valve (3); measuring the temperature of the gas stored in the measuring chamber by a temperature sensor; calculating through the microprocessor, the pressure drop in the measuring chamber required to discharge the mass of gas that was predetermined on the control panel or calculating the number of doses of a fixed quantity in grams of gas required to achieve the total dosage; applying the gas with the application lance, which sends a signal to the microprocessor; the microprocessor, after receiving the application signal, allows the outlet valve to open to begin the discharge of gas from the measuring chamber; during the gas discharge, measuring the pressure difference of the gas in the measuring chamber until a predetermined value is reached, allowing the dosage of a fixed quantity in grams of gas. Once the microprocessor detects the pressure difference inside the measuring chamber, close the outlet valve. Then repeat the gas discharge in fixed doses in grams until the final dosage value is reached.

The gas dosing method that involves entering the basic parameters into the control panel includes: opening the intake valve, keeping the outlet valve closed, and measure the internal pressure difference of the measuring chamber using the internal pressure sensor, until reaching the predetermined value to produce the dosing of a predetermined amount in grams of gas. Upon reaching this predetermined value based on the parameters entered into the control panel, then close the intake valve and begin measuring the temperature. The device performs these measurements until it receives the gas discharge (or dosing) signal from the operator who activated the injection system. At that moment, the last internal pressure and internal temperature values are recorded. With these values, the microprocessor solves the formula indicated above to determine the final internal pressure that must exist in the measuring chamber to deliver the amount of gas necessary to dose the exact amount of gas into the container. Once the microprocessor obtains the final internal pressure value under the current conditions, the microprocessor sends the signal to open the outlet valve while continuously measuring the internal pressure of the measuring chamber until it reaches the calculated final pressure. Then the outlet valve is closed. The dosing operation repeats the number of doses until the predetermined amount of gas is achieved.

Gaseous $SO_2$ injections are applied in doses of grams of $SO_2$, that is, it is a gas injection measured in mass quantity with a resolution of 0.1 grams and an application range that goes from 0.1 grams to 9.9 grams, being, in the case of barrels, ranges suitable for that volume of wine.

The application of gaseous $SO_2$ is conducted within the wine inside the tank so that the gaseous $SO_2$ dissolves in the wine before reaching the surface.

APPLICATION EXAMPLES

Tests were conducted on barrels containing wine after application of $SO_2$ using different application methods.

Preliminary determinations were made in the wine to detect, for example, the presence of Brettnomyces - Dekkera bruxellensis, which is a yeast whose presence causes irreversible and harmful effects on the organoleptic qualities of the wine due to the production of volatile phenols, and the wine was found to be free of these yeasts.

The pH acidity, the percentage of alcohol, and the free and total sulfur dioxide were measured. In addition, the reducing matter was measured, in order to have an identification of the sample on which the measurements will be made.

The wine was determined to have a total acidity of 3.7 g/L (determined by OIV-MA-AS313-01:R2015), a volatile acidity of 0.5 g/L (determined according to OIV-MA-AS313-02:R2015), a pH of 3.28 (determined according to OIV-MA-AS313-15:R2011), an alcoholic strength of 12.4% (determined according to OIV-MA-AS312-01B:R2015), a free sulfur dioxide content of 15 mg/L and a total sulfur dioxide content of 98 mg/L (determined according to OIV-MA-AS323-04A:R2012) and a reducing matter content of 2.19 g/L (determined according to qa/I-01/MA-BF-07, SAG edition 2004)

Table 1 shows the sulfitation results with the device comprising a diffuser of prior art WO2008055905 in a barrel of wine. The sample was taken using the multipoint sampler at different times and the sulfite concentration was measured at different locations within the barrel.

Table 1: $SO_2$ applied with the WO2008055905 diffuser device in a barrel with wine.

| Barrel 1 | Sampling location | | | | |
|---|---|---|---|---|---|
| Time | Surface | Center | Center Left | Center right | Background |
| 5 min | 10.8 | 7.7 | 7.4 | 8.3 | 7.3 |
| 15 min | 9.6 | 6.4 | 8.9 | 8.3 | 8.9 |
| 30 min | 8 | 8.9 | 65 | 10.8 | 10.5 |
| 1 hour | 11.5 | 10.2 | 248 | 47 | 11.5 |
| 1 week | 29 | 28 | 37 | 39 | 31 |
| 2 weeks | 21 | 22 | 17.6 | 16.4 | 21 |

It was found that using the WO2008055905 microdiffuser device, the distribution of sulfite inside the wine barrel was not homogeneous, it had a very dispersed sulfite distribution and did not achieve the desired sulfite concentration.

The barrel 2 containing water was then sulfited using the microdiffuser device from document WO2008055905. The results of the samples taken with the multipoint sampler at different times from the day of treatment are shown in Table 2.

Table 2: $SO_2$ applied with the microdiffuser device of document WO2008055905 in a barrel with water. Barrel contents: water, sulfite adjustment using device WO2008055905, results are expressed in ppm

| Barrel 2 | Sampling location | | | | |
|---|---|---|---|---|---|
| Time | Surface | Center | Center Left | Center right | Background |
| 5 min | 4.1 | 1.6 | 8.9 | 1 | 3.2 |
| 15 min | 2.8 | 10 | 18.2 | 9.6 | 7 |
| 30 min | 8.3 | 12 | 126 | 23 | 10 |
| 1 hour | 11.8 | 14 | 119 | 21 | 22 |
| 1 week | 37 | 39 | 35.8 | 38 | 36 |
| 2 weeks | 28 | 24 | 30 | 26 | 22 |

It was found that using the WO2008055905 microdiffuser device, the distribution of sulfite inside the water barrel was not homogeneous, it had a very dispersed sulfite distribution and did not achieve the desired sulfite concentration. In other words, it was found that the microdiffuser of the WO2008055905 device generates 0.1 grams in $37cm^3$ and does not allow a good distribution of sulfite inside the barrel.

The sulfitation procedure was conducted using other methods of the previous art in barrels containing wine. The results are shown in Tables 3 and 4.

Barrel 3 containing wine was then sulfited with a 5% solution. The results of the samples taken with the multipoint sampler at different times from the day of treatment are shown in Table 3. In this method, the wine is agitated after the addition of the sulfited water, injecting a large flow of nitrogen into the barrel for a few seconds, using a nitrogen cylinder, a ball valve, and a hose.

It should be mentioned that the 5% solution must be prepared one day in advance and the process is manual. A certified 5% solution is also available. The user has to dose and apply at the same time.

Table 3, wine barrel content, sulfite adjustment with 5% solution, results are expressed in ppm

| Barrel 3 | Sampling location | | | | |
|---|---|---|---|---|---|
| Time | Surface | Center | Center Left | Center right | Background |
| 5 min | 34 | 34 | 35 | 35 | 33 |
| 15 min | 35 | 32 | 35 | 36 | 36 |
| 30 min | 33 | 33 | 33 | 35 | 35 |
| 1 hour | 35 | 33 | 33 | 33 | 43 |
| 1 week | 43 | 44 | 42 | 44 | 43 |
| 2 weeks | 37 | 38 | 37 | 41 | 24 |

It was found that using a 5% solution, the sulfitation was homogeneous.

The barrel 4 containing wine was then sulfited with tablets labelled with a weight of 5ppm each. The results of the samples taken with the multipoint sampler at different times from the day of treatment are shown in Table 4.

Table 4, contents of barrel 4, wine, the sulfite adjustment was done with 5ppm tablets each, results are expressed in ppm.

| Barrel 4 | Sampling location | | | | |
|---|---|---|---|---|---|
| Time | Surface | Center | Center Left | Center right | Background |
| 5 min | 87 | 82 | 83 | 83 | 82 |
| 15 min | 83 | 78 | 79 | 83 | 87 |
| 30 min | 87 | 78 | 83 | 83 | 88 |
| 1 hour | 84 | 78 | 80 | 81 | 89 |
| 1 week | 94 | 92 | 95 | 94 | 93 |
| 2 weeks | 64 | 64 | 64 | 64 | 64 |

It was found that using 5ppm tablets each, the sulfitation was homogeneous; however, the box containing the tablets was mislabeled, containing tablets of a different weight than mentioned, generating a sulfite concentration twice as high as expected.

For the test in tables 1, 3 and 4, three barrels with Cabernet Sauvignon variety red wine were used, and for test 2, one barrel with only water was used.

In Tables 5 and 6 below, the concentration of $SO_2$ obtained by sulfiting with the apparatus of this invention was measured; a barrel containing water was used to verify the effectiveness of the apparatus of the present invention. The results obtained allowed for improvements in the precision and homogeneous distribution of $SO_2$ in two tests conducted in barrels containing water. The nozzle of this invention generates pulses of greater volume, for example 0.3 grams in approximately $120cm^3$. To achieve a greater volume, the volume of the measuring chamber was increased.

All $SO_2$ content analyses in the tested solutions were conducted by the VCL SA analysis laboratory, specializing in wines and belonging to IIVO (Wine and Olive Innovation Incubator).

Sampling was carried out at five points on the barrels, for which the designed multipoint sampling device was used, which allows sampling at 3 different points of the solution, which are not usually considered in traditional industry sampling, which only allows taking samples from the central zone (top, middle and bottom of the barrel in the area of the plug). The multipoint sampler is itself an innovation and is complementary not only to the apparatus of this invention, but is useful for sampling any sulfitation method used by the industry.

Figure 5 shows the multi-point sampler of the invention that was used to take samples in the center, center left, and center right zones. In addition, samples were taken from the surface and bottom.

The Test Barrel 1 containing water was then sulfited with the apparatus of this invention. The results of the samples taken with the multipoint sampler at different times from the day of treatment are shown in Table 5.

Table 5 Measurements of $SO_2$ in water, applied with the apparatus of this invention.

| Test Barrel 1 | Sampling location | | | | |
|---|---|---|---|---|---|
| Time (h) | Surface | Center | Center Left | Center right | Background |
| 0.5 | 23 | 39 | 36.4 | 35.2 | 15.3 |
| 1 | 28.8 | 37.1 | 36.8 | 35.8 | 27.8 |
| 2 | 32.6 | 33.9 | 35 | 40.6 | 37.1 |
| 6 | 35 | 32.6 | 36.1 | 33.2 | 39.6 |
| 18 | 35.2 | 39.6 | 34.5 | 32.6 | 36.4 |
| 24 | 34.5 | 32 | 35.8 | 33.2 | 35.8 |

The Test Barrel 2 containing water was then sulfited with the apparatus of this invention. The results of the samples taken with the multipoint sampler at different times from the day of treatment are shown in Table 6.

Table 6: $SO_2$ applied in a barrel with water with the apparatus of this invention.

| Test Barrel 2 | Sampling location | | | | |
|---|---|---|---|---|---|
| Time (h) | Surface | Center | Center Left | Center right | Background |
| 0.5 | 58.2 | 53.4 | 57.6 | 49 | 54.4 |
| 1.5 | 64 | 63.3 | 57.6 | 58.5 | 62.7 |
| 3.5 | 55 | 57.6 | 62 | 56 | 56.6 |
| 9.5 | 59.2 | 57.6 | 56.3 | 58.8 | 52.4 |
| 27.5 | 51.8 | 56.3 | 53.1 | 54.4 | 54.3 |
| *51.5* | 51.2 | 48.6 | 45.4 | 55.3 | 47 |

It was found that using the apparatus of this invention, the distribution of sulfite within the barrel of water is homogeneous, achieving a desired distribution and concentration of sulfite. In other words, it was verified that the nozzle of the apparatus of this invention allows a good distribution of sulfite inside the barrel.

The apparatus of this invention increases the flow of $SO_2$ applied in each of the pulses, improving the distribution of $SO_2$ within the barrel.

The apparatus of this invention comprises a nozzle (shown in Figure 1) that allows the application of gas into the wine to be sulfited much more effectively and with a higher outlet pressure so that effervescence and microbubbling are generated, which are necessary for the correct dilution and distribution of the gas in the wine to be treated.

The results showed that with the device described in WO2008055905, a high dispersion of $SO_2$ concentrations is shown in both pure water and wine. Since the dispersion pattern is similar in barrels with wine as in barrels with pure water, subsequent tests were conducted only with barrels filled with water.

The tests and analyses shown in Tables 5 and 6, conducted in barrels with water, show that, with the apparatus of this invention, the problem of the distribution of $SO_2$ concentrations within the barrel is decisively resolved.

The apparatus of this invention comprises an application lance comprising a nozzle that generates turbulence in the wine and an easy-to-handle support to ensure an optimal result when performing sulfitation with $SO_2$ of wines packaged in barrels.

**Claims**

1. A dosing apparatus for sulfur dioxide gas ($SO_2$) in wine contained in wooden barrels, comprising a sensor for measuring pressure and a sensor for measuring temperature, a known volume measuring chamber (9) that is connected by an outlet duct to an application lance (10), **CHARACTERIZED IN THAT**:

the application lance comprises a nozzle having holes (23) which allow both the entry of wine into the nozzle as well as SO$_2$ gas output from the nozzle, generating a flow of enough gas for a homogeneous distribution of the gas within the barrel;

where the application lance comprises a support comprising a base (30) and legs that allow the application lance to be supported on the upper wall of the barrel near the plug area;

where the base of the application lance support in the position of use, is horizontal to the barrel wall, raised only a few centimeters from the barrel wall.

2. The gas dosing apparatus of claim 1, **CHARACTERIZED in that** the nozzle comprises a long vertical tube (20) opens at a lower end into a cross tube (22) forming a T, wherein the vertical tube at its lower end has two lateral holes (21) through which SO$_2$ passes into the cross tube (22), wherein the transverse tube (22) forms a closed cylinder at its ends.

3. The gas dosing apparatus of claim 2, **CHARACTERIZED in that** the transverse tube (22) of the nozzle has between 3 and 10 holes (23) on each side, totaling between 6 and 20 holes, where the holes (23) have a diameter of 2 mm to 6 mm.

4. The gas dosing apparatus of claim 1, **CHARACTERIZED in that** the application lance support comprises a flat rectangular base (30) that can be supported on the upper wall of the barrel.

5. The gas dosing apparatus of claim 1, **CHARACTERIZED in that** the base (30) of the application lance support comprises lateral vertical extensions (36) on its lateral edges and a rear vertical extension (40) on its rear edge, wherein the lateral vertical extensions (36) at their front end (37) include respective lateral tabs (31) that serve as a support leg on the barrel wall, wherein the base (30) further comprises a trapezoidal front extension that narrows sharply in its central front area (38) and then deviates vertically downwards in a central rectangular section (32) that reaches a greater height compared to said lateral vertical extensions (36), wherein the central rectangular section (32) in turn includes a central tab (33) that serves as a support leg on the inner wall of the barrel.

6. The gas dosing apparatus of claim 5, **CHARACTERIZED in that** the two side tabs (31) and the central tab (33) are configured as support legs to rest on the barrel; wherein the two side legs or side tabs (31) rest on the outer upper wall of the barrel near the plug area, while the central rectangular section (32) is inserted into the barrel in the plug area, while the central tab (33) or central support leg is secured to the inner wall of the plug area of the barrel, wherein the central leg is fitted within the barrel by means of the horizontal flange or central tab (33) to allow a secure grip of the base (30) of the application lance to the barrel.

7. The gas dosing apparatus of claim 5, **CHARACTERIZED in that** the base (30) of the application lance support has a groove (34) arranged in the rear central area, through which a user's hand can be inserted to allow manual gripping of the application lance, wherein the groove (34) at its rear edge further has a rectangular wall (35) that slopes vertically downwards to allow comfortable gripping of the application lance,

8. The gas dosing apparatus of claim 7, **CHARACTERIZED in that** the base (30) of the support of the application lance comprises, in its rear edge a posterior vertical extension (40) includes a horizontally oriented rectangular extension (39), the extension of which does not extend beyond the groove (34), where the rectangular wall (35) of the groove (34) and the rectangular extension (39) of the rear vertical extension (40) form a convenient grip handle for the application lance.

9. The gas dosing apparatus of claim 5, **CHARACTERIZED in that** the application lance holder has a trigger button on the side vertical extension to activate the device.

10. The gas dosing apparatus of claim 1, **CHARACTERIZED in that** it also comprises a receptacle to keep the application lance sanitized in the place where the application lance is stored sanitized when not in use or between each application.

11. The gas dosing apparatus of claim 10, **CHARACTERIZED in that** the receptacle for sanitizing the application lance incorporates an ozone generator to keep the place where the application lance is stored ozonated to avoid cross-contamination between barrels.

**12.** The gas dosing apparatus of claim 11, **CHARACTERIZED in that** the receptacle for sanitizing the application lance is dry ozonated with ozonated air, wherein the receptacle comprises a silicone or Teflon plug that allows the application lance to enter and prevents the ozone from being released into the environment.

**13.** A method for dosing sulfur dioxide gas ($SO_2$) into wine contained in wooden barrels, **CHARACTERIZED in that** it comprises the steps of:

introducing the application lance inside the barrel, wherein the application lance comprises a nozzle having holes (23) which allow both the entry of wine into the nozzle as well as $SO_2$ gas output from the nozzle, generating a flow of gas enough for a homogeneous distribution of the gas within the barrel;
supporting the application lance in the barrel and fixing the application lance in the plug area by a support comprising a base and legs that support the application lance on the upper wall of the barrel near the plug area, where the base of the application lance support in the position of use is horizontal to the barrel wall, raised only a few centimeters from the barrel wall;
activating the apparatus, to generate a cycle of shots that deliver doses of $SO_2$ to be dosed in grams, until the predetermined amount of gas is achieved, wherein the application lance is kept in a vertical and perpendicular position regarding the transverse axis of the larger side of the barrel during the time that the shooting cycle lasts, independent of the operator.

**14.** The method of claim 13, **CHARACTERIZED in that** also includes a step of scanning a barcode embedded in each barrel to improve traceability, where the barcode must be scanned before activating the device to generate a firing cycle, where the barcode reading provides data on the dose that corresponds to each barrel.

**15.** The method of claim 14, **CHARACTERIZED in that** is also comprises the step of verifying if the application was made to all barrels, determining which barrel was left untreated, and correcting the error to ensure that the application was made to the entire batch, and also includes collecting information on the barrel number, the dose applied, the date and time of the application and the identification number of the application apparatus and the identification of the user who made the application.

**16.** The method of claim 13, **CHARACTERIZED in that** it comprises delivering a dose of $SO_2$ to be dosed in grams until the predetermined amount of gas is achieved, for which it comprises the steps of measuring the pressure difference and the temperature of the gas within the constant volume measuring chamber, where by means of the actuation of the application system, a signal is sent to a microprocessor, where the microprocessor after receiving the application signal allows the outlet valve to be opened to begin the discharge of a predetermined amount of gas from the measuring chamber.

**17.** The method of claim 13, **CHARACTERIZED in that** it comprises the application of gas measured in mass quantity with a resolution in the range of 0.1 grams to 9.9 grams.

FIG. 1

Fig. 2

FIG. 2

FIG. 3

FIG. 4

FIG. 5

FIG. 6

FIG. 7

**INTERNATIONAL SEARCH REPORT**

| International application No. |
| --- |
| PCT/CL2024/050053 |

| A. | CLASSIFICATION OF SUBJECT MATTER |
| --- | --- |

(CIP) C12G1/00, 1/02, 1/04, C12H1/00, 1/14, C12L11/00, B01F33/40, B08B9/08 (2024.01)

According to International Patent Classification (IPC) or to both national classification and IPC

| B. | FIELDS SEARCHED |
| --- | --- |

Minimum documentation searched (classification system followed by classification symbols)

(CIP) C12G1/00, 1/02, 1/04, C12H1/00, 1/14, C12L11/00, B01F33/40, B08B9/08; (CPC) C12G2200/25

Documentation searched other than minimum documentation to the extent that such documents are included in the fields searched

Electronic data base consulted during the international search (name of data base and, where practicable, search terms used)

DERWENT INNOVATION, GOOGLE PATENT, ESPACENET, INAPI

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | DE 2401764 A1 (METALLWERK AG BUCHS SG BUCHS), 24/07/1975. Abstract, paragraphs (0007)-(0015),(0025),figures 1 to 3 | 1-17. |
| Y | ES 1004225 U (QUADRAS, L.), 01/09/1988. Abstract, column 2 lines 19 to 60, figures 1-2 | 1, 4, 10-15. |
| Y | ECO STEAM, Wine barell steam cleaning. YouTube (on line) [video], 18/09/2018. (retrieved on 19-08-2024). Retrieved from <https://www.youtube.com/watch?v=AyZvQz1UrfQ>. minutes 0:00 a 0:57. | 1, 4, 10-15. |
| A | WO 2008/055905 A1 (YT INGENIERIA LTDA), 15/05/2008. The whole document. Cited in the application | |
| A | US 2011/268856 A1 (PAETZOLD M), 03/11/2011. The whole document | |

| ☒ Further documents are listed in the continuation of Box C. | ☒ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 16/08/2024 | 06/09/2024 |

| Name and mailing address of the ISA/ CL | Authorized officer |
| --- | --- |
| Facsimile No. | Telephone No. |

Form PCT/ISA/210 (second sheet) (January 2015)

## INTERNATIONAL SEARCH REPORT

| International application No. |
| --- |
| PCT/CL2024/050053 |

**C (Continuation).    DOCUMENTS CONSIDERED TO BE RELEVANT**

| Category* | Citation of document, with indication, where appropriate, of the relevant passages | Relevant to claim No. |
| --- | --- | --- |
| A | ES 2396676 A1 (MAQUINAS Y HERRAMIENTAS LA RIOJA SL), 25/02/2013.<br>The whole document | |
| A | FR 2831835 A1 (LOUBES, J.), 09/05/2003.<br>The whole document | |
| A | WO 2022/185314 A1 (ARIEL SCIENT INNOVATIONS LTD), 09/09/2022.<br>The whole document | |
| A | FR 471,134 A (CALLENS, H.), 15/10/1914.<br>The whole document | |
| P, A | WO 2023/097394 A1 (BARRELWISE TECH LTD), 08/06/2023.<br>The whole document | |

Form PCT/ISA/210 (continuation of second sheet) (January 2015)

INTERNATIONAL SEARCH REPORT
Information on patent family members

International application No.

PCT/CL2024/050053

| | | | |
|---|---|---|---|
| DE2401764 (A1) | 24-07-1975 | None | |
| ES1004225 (U) | 01-09-1988 | ES1004225 (Y) | 01-04-1989 |
| WO2008055905 (A1) | 15-05-2008 | AU2007316662 (A1) | 15-05-2008 |
| | | AU2007316662 (B2) | 16-08-2012 |
| | | CN101600789 (A) | 09-12-2009 |
| | | EP2089504 (A1) | 19-08-2009 |
| | | EP2089504 (B1) | 20-02-2013 |
| | | ES2410867 (T3) | 03-07-2013 |
| | | NZ577015 (A) | 25-05-2012 |
| | | PT2089504 (E) | 22-05-2013 |
| | | US2010278980 (A1) | 04-11-2010 |
| | | ZA200903166 (B) | 28-07-2010 |
| US2011268856 (A1) | 03-11-2011 | AU2009309539 (A1) | 06-05-2010 |
| | | CL2011000974 (A1) | 21-10-2011 |
| | | EP2346979 (A2) | 27-07-2011 |
| | | FR2937651 (A1) | 30-04-2010 |
| | | FR2937651 (B1) | 01-05-2015 |
| | | WO2010049653 (A2) | 06-05-2010 |
| | | WO2010049653 (A3) | 03-03-2011 |
| | | ZA201103105 (B) | 25-01-2012 |
| ES2396676 (A1) | 25-02-2013 | ES2396676 (B1) | 20-09-2013 |
| | | EP2918666 (A1) | 16-09-2015 |
| | | EP2918666 (A4) | 07-09-2016 |
| | | EP2918666 (B1) | 02-05-2018 |
| | | ES2537612 (A1) | 10-06-2015 |
| | | ES2537612 (B1) | 30-09-2016 |
| | | ES2681368 (T3) | 12-09-2018 |
| | | WO2014072562 (A1) | 15-05-2014 |
| FR2831835 (A1) | 09-05-2003 | None | |
| WO2022185314 (A1) | 09-09-2022 | AU2022230329 (A1) | 12-10-2023 |
| | | CL2023002587 (A1) | 19-01-2024 |
| | | CN117203315 (A) | 08-12-2023 |
| | | EP4301837 (A1) | 10-01-2024 |
| | | US2024123476 (A1) | 18-04-2024 |
| FR471134 (A) | 15-10-1914 | None | |
| WO2023097394 (A1) | 08-06-2023 | None | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008055905 A